# EUROPÄISCHE PATENTSCHRIFT

(11) **EP 2 761 192 B1**
(45) Veröffentlichungstag und Bekanntmachung des Hinweises auf die Patenterteilung: **10.05.2017**
(21) Anmeldenummer: 12748220.6
(22) Anmeldetag: 16.08.2012
(51) Int. Cl.: F16B 5/02, F16B 13/00, F16B 19/02, F16B 33/00, G01F 1/58

(54) **SCHRAUBHÜLSE**
SCREW BUSHING
MANCHON POUR VIS

(30) Priorität: 27.09.2011 DE 102011083550
(43) Veröffentlichungstag der Anmeldung: 06.08.2014
(73) Patentinhaber: Endress+Hauser Flowtec AG, 4153 Reinach (BL) (CH)
(72) Erfinder: GRAF, Oliver, 4447 Känerkinden (CH)
(74) Vertreter: Andres, Angelika Maria
(86) Internationale Anmeldenummer: PCT/EP2012/066042
(87) Internationale Veröffentlichungsnummer: WO 2013/045172

(56) Entgegenhaltungen:
- EP-A1- 1 674 836
- EP-A2- 0 420 799
- DE-A1- 1 513 908
- DE-A1- 3 236 740
- DE-B- 1 054 155
- DE-C- 402 536
- US-A- 1 905 790
- US-B1- 6 402 129

## Beschreibung

Die vorliegende Erfindung betrifft ein Durchflussmessgerät mit einer Schraubhülse zur Isolierung einer Schraube. Das Dokument EP 1 674 836 A zeigt ein bekanntes Durchflussmessgerät.

Schraubhülsen sind zur Isolierung von Schrauben bekannt.

Die Aufgabe der Erfindung besteht darin, eine Schraubhülse vorzuschlagen, welche geeignet ist, Toleranzen in den zu verschraubenden Bauteilen auszugleichen.

Die Aufgabe wird gelöst durch den Gegenstand des unabhängigen Anspruchs 1. Weiterbildungen und Ausgestaltungen der Erfindung finden sich in den Merkmalen der jeweils abhängigen Ansprüche wieder.

Die Erfindung lässt zahlreiche Ausführungsformen zu. Einige davon sollen hier kurz anhand der nachfolgenden Figuren näher erläutert werden. Gleiche Elemente sind in den Figuren mit gleichen Bezugszeichen versehen.
- Fig. 1: zeigt eine erfindungsgemäße Schraubhülse im Schnitt,
- Fig. 2: zeigt einen Querschnitt durch ein erfindungsgemäßes Spulensystem eines erfindungsgemäßen magnetisch-induktiven Durchflussmessgeräts,
- Fig. 3: zeigt prespektivisch ein erfindungsgemäßes Spulensystem eines erfindungsgemäßen magnetisch-induktiven Durchflussmessgeräts.

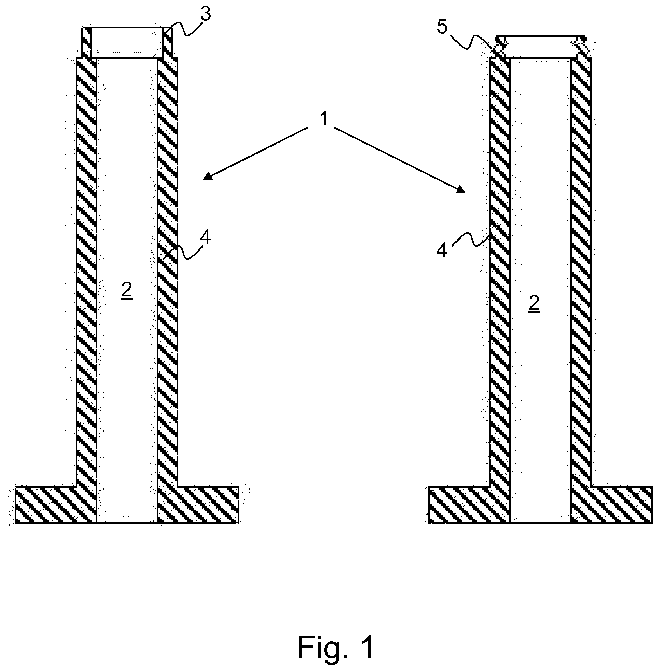

In Fig. 1 ist eine erfindungsgemäße Schraubhülse 1 zur elektrischen und/oder magnetischen Isolierung einer Schraube dargestellt; links im Zustand nach der Herstellung, rechts mit einem Bereich, der die Form eines Faltenbalgs angenommen hat. Die Schraubhülse 1 weist eine Bohrung 2 zur Aufnahme und Führung der Schraube auf. Diese weist zur Führung der Schraube in einem dazu vorgesehenen Bereich 4 der Schraubhülse 1 einen über die Länge des Bereichs 4 konstanten Innendurchmesser auf, welcher durch die Bohrung 2 festgelegt ist.

Die Schraubhülse 1 ist erfindungsgemäß so ausgestaltet, dass sie sich bei einer axial auf sie einwirkenden Kraft vorgegebener Größe um ein vorgegebenes Maß axial verkürzt, wobei sie zumindest teilweise die Form eines Faltenbalgs 5 annimmt.

Im skizzierten Ausführungsbeispiel weist die Schraubhülse 1 an ihrer Spitze einen Bereich mit einer verringerten Wandstärke aufweist, welcher bei einer axial auf ihn einwirkenden Kraft vorgegebener Größe die Form eines Faltenbalgs 5 annimmt und sich somit ein vorgegebenes Maß axial verkürzt. Im gezeigten Ausführungsbeispiel handelt es sich bei dem Bereich mit verringerter Wandstärke um einen Ring 3 auf der Spitze der Schraubhülse 1. Der Ring 3 weist einen größeren Innendurchmesser und einen geringeren Außendurchmesser als die Schraubhülse 1 in einem Bereich 4 zur Führung der Schraube auf. Die Schraubhülse 1 ist somit im Bereich des Rings 3 nicht geeignet zur Führung der Schraube.

Wird die Schraubhülse 1 mit einer Kraft axial beaufschlagt, welche eine vorgegebene Größe aufweist oder übersteigt, so wird der Ring in der Art deformiert, dass er die Form eines Faltenbalgs 5 annimmt.

Die Länge des Bereichs mit der verringerten Wandstärke, also hier des Rings 3, ist gemäß einer Ausführungsform der Erfindung klein im Vergleich mit der axialen Länge des Bereichs 4 der Schraubhülse 1 zur Führung der Schraube.

Nimmt die Schraubehülse 1 teilweise die Form eines Faltenbalgs 5 an, so weist, gemäß einer weiteren Weiterbildung der erfindungsgemäßen Schraubhülse, der Faltenbalg einen geringeren Außendurchmesser auf als die Schraubhülse 1 in einem Bereich 4 zur Führung der Schraube. Werden beispielsweise zumindest zwei mit einer Schraube zu verschraubende und von der Schraube zu isolierende Bleche miteinander verschraubt, so werden diese Bleche nicht zueinander radial zur Schraubenhülse dadurch verschoben, dass die Schraubenhülse derart deformiert ist, dass sie eine Kraft radial zur Schraubenhülse auf eines der Bleche durch ihre Verformung aufbringt, welche ihren sonstigen Außendurchmesser überragt.

Eine erfindungsgemäße Schraubenhülse umfasst insbesondere einen Polymerwerkstoff, wie z.B. Polyethersulfon. Alternative Materialien sind beispielsweise Polyetaetaketon oder Polyphenülensulfid. Die Schraubhülsen sind somit elektrisch und gegebenenfalls magnetisch isolierend.

Natürlich sind die erfindungsgemäßen Schraubhülsen, wie auch die Schraubhülsen des Stands der Technik, zu einem gewissen Maße axial elastisch verformbar. Das Maß ist insbesondere abhängig von eingeleiteter Kraft, Werkstoff und Wandstärke der Schraubhülse.

Die erfindungsgemäße Verformung der Schraubhülse 1 zu einem Faltenbalg ist dabei elastisch oder teilweise plastisch.

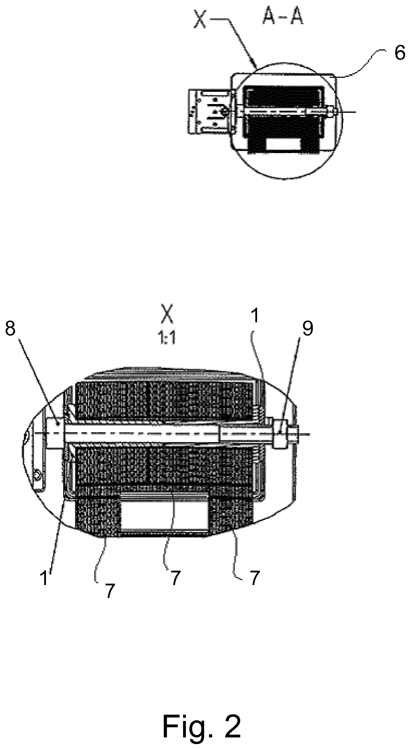

Fig. 2 zeigt nun ein magnetisch-induktives Durchflussmessgerät, mit einer Spule 6 und mit durch die Spule 6 geführten Kernblechen 7, welche mittels zumindest einer Schraubverbindung verschraubt sind. Die Schrauben 8 sind dabei mittels erfindungsgemäßen Schraubhülsen 1 von den Kernblechen 7 elektrisch und/oder magnetisch isoliert.

Im veranschaulichten Beispiel, sind zwei sich gegenüberstehende Schraubhülsen 1 mittels der Schraubverbindung, hier aus Schraube 8 und Mutter 9, so gegeneinander vorgespannt, dass sich zumindest eine Schraubhülse 1 um ein vorgegebenes Maß axial verkürzt, wobei sie zumindest teilweise die Form eines Faltenbalgs annimmt. Zur Isolierung verhindern die Schraubhülsen 1 den Kontakt der Kernbleche 7 mit den Schrauben 8. Um Toleranzen beispielsweise der Dicke des Kernblechstapels auszugleichen, sind die Schraubhülsen 1 dabei so ausgestaltet, dass die Summe ihrer Längen im nichtmontierten Zustand, welche im montierten Zustand im Kernblechstapel liegen, die Dicke des Kernblechstapels um ein vorgegebenes Maß überschreitet. Das vorgegebene Maß ist dabei kleiner als die größtmögliche axiale Stauchung der Schraubhülsen 1, ohne dass diese außerhalb der erfindungsgemäßen Parameter verformt werden.

Bei der Montage werden die Schraubhülsen 1 von beiden Seiten in den Kernblechstapel eingeführt. Ihre ringförmigen Spitzen berühren sich dabei. Wird nun eine Schraube 8 durch die Schraubhülsen 1 gesteckt und verschraubt, wird über den Schraubenkopf eine axial wirkende Kraft in die Schraubhülsen 1 geleitet, die dazu führt, dass sich zumindest eine der Schraubhülsen 1 erfindungsgemäß verformt, bis der Schraubenkopf anliegt und die Summe der Längen der Schraubhülsen 1 im Kernblechstapel der Dicke des Kernblechstapels entspricht.

Selbstverständlich wäre dies auch durch andere Maßnahmen zu erreichen, beispielsweise durch nichtleitende Schrauben oder Schraubhülsen mit ineinandergreifenden Ringen an ihren Spitzen, wobei ein erster Ring einen Innendurchmesser aufweist, welcher größer oder gleich groß ist dem schraubenführenden Bereich der Schraubhülse und einen Außendurchmesser aufweist, welcher kleiner ist als der des schraubenführenden Bereichs der Schraubhülse, wobei der zweite Ring dann einen Innendurchmesser aufweist, welcher größer oder gleich groß ist dem Außendurchmesser des ersten Rings und einen Außendurchmesser aufweist, welcher kleiner oder gleich groß ist als der des schraubenführenden Bereichs der Schraubhülse.

Ein Vorteil der Erfindung gegenüber diesen Lösungen ist jedoch, dass die Schraubhülse einfacher und kostengüstiger herzustellen ist.

Gemäß einer Weiterbildung der Erfindung weisen die Kernbleche gleiche Form und Größe, insbesondere eines ersten Schenkels, und vorgegebene Bohrungen, insbesondere im ersten Schenkel, auf, und sind so angeordnet, dass die Bohrungen eines ersten Kernblechs deckungsgleich sind mit den Bohrungen eines zweiten Kernblechs im montierten Zustand des Spulensystems, so dass sich das erste und das zweite Kernblech miteinander durch die Bohrungen verschrauben lassen, wobei das erste Kernblech und das zweite Kernblech zueinander axial versetzt durch die Spule geführt sind oder wobei das erste Kernblech und das zweite Kernblech parallel und entgegengesetzt zueinander orientiert durch die Spule geführt sind, wobei der erste Schenkel des ersten Kernblechs und der erste Schenkel des zweiten Kernblechs deckungsgleich angeordnet sind. Ein erstes Ende des ersten Kernblechs, hier im Bereich eines zweiten Schenkels, ist somit neben einem zweiten Ende des zweiten Kernblechs angeordnet. Zweite Schenkel der Kernbleche befinden sich dann auf unterschiedlichen Seiten der Spule und zeigen insbesondere in dieselbe Richtung.

Gemäß einer weiteren Weiterbildung der Erfindung weist jedes Kernblech einen ersten und einen zweiten Schenkel auf, welche L-förmig miteinander verbundenen sind, wobei zumindest ein erstes Kernblech und ein zweites Kernblech und ein drittes Kernblech so durch die Spule geführt sind, dass der erste Schenkel des ersten Kernblechs und der erste Schenkel des zweiten Kernblechs und der erste Schenkel des dritten Kernblechs parallel zueinander durch die Spule verlaufen und, dass der zweite Schenkel des ersten Kernblechs und der zweite Schenkel des zweiten Kernblechs und der zweite Schenkel des dritten Kernblechs parallel zueinander verlaufen, wobei der zweite Schenkel des ersten Kernblechs und der zweite Schenkel des dritten Kernblechs auf einer ersten Seite der Spule angeordnet sind und der zweite Schenkel des zweiten Kernblechs auf einer der ersten Seite abgewandten, zweiten Seite der Spule angeordnet ist, wobei das zweite Kernblech zwischen dem ersten und dem dritten Kernblech angeordnet, insbesondere mittig durch die Spule geführt ist und wobei ein Polschuh zwischen zumindest den zweiten Schenkeln des ersten und dritten Kernblechs und einem Messrohr angeordnet ist. Die ersten Schenkel der Kernbleche und der zweite Schenkel des ersten und eines dritten Kernblechs und der zweite Schenkel des zweiten Kernblechs bilden dabei insbesondere einen U-förmigen Spulenkern. Die Bohrungen in den Kernblechen sind somit symmetrisch bezogen auf die Länge des ersten Schenkels im Kernblech angeordnet.

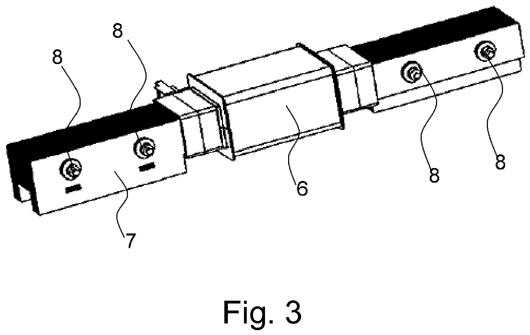

Das in Fig. 2 geschnittene Spulensystem ist in Fig. 3 perspektivisch gezeichnet.

### Bezugszeichenliste

- 1: Schraubhülse
- 2: Bohrung der Schraubhülse
- 3: Ring
- 4: Bereich der Schraubhülse zur Führung der Schraube
- 5: Faltenbalg
- 6: Spule
- 7: Kernbleche
- 8: Schraube
- 9: Mutter

## Patentansprüche

1. Magnetisch-induktives Durchflussmessgerät mit einer Spule (6) und durch die Spule (6) geführte Kernbleche (7),
**dadurch gekennzeichnet,**
**dass** es eine Schraubhülse (1) umfasst, wobei die Kernbleche (7) mittels einer Schraube (8) verschraubt sind, wobei die Schraube (8) mittels der Schraubhülse (1) von den Kernblechen (7) isoliert ist, wobei die Schraubhülse so ausgestaltet ist, dass sie sich bei einer axial auf sie einwirkenden Kraft vorgegebener Größe um ein vorgegebenes Maß axial verkürzt, wobei sie zumindest teilweise die Form eines Faltenbalgs (5) annimmt.

2. Magnetisch-induktives Durchflussmessgerät nach Anspruch 1,
**dadurch gekennzeichnet,**
**dass** die Schraubhülse einen Bereich (3) mit einer verringerten Wandstärke aufweist, welcher bei einer axial auf ihn einwirkenden Kraft vorgegebener Größe die Form eines Faltenbalgs (5) annimmt und sich somit ein vorgegebenes Maß axial verkürzt.

3. Magnetisch-induktives Durchflussmessgerät nach Anspruch 2,
**dadurch gekennzeichnet,**
**dass** der Bereich (3) mit der verringerten Wandstärke an der Spitze der Schraubhülse (1) angeordnet ist, wobei der Bereich einen größeren Innendurchmesser und einen geringeren Außendurchmesser als die Schraubhülse (1) in einem Bereich (4) zur Führung einer Schraube aufweist.

4. Magnetisch-induktives Durchflussmessgerät nach einem der Ansprüche 2 oder 3,
**dadurch gekennzeichnet,**
**dass** die axiale Länge des Bereichs (3) mit der verringerten Wandstärke klein ist im Vergleich mit der axialen Länge eines Bereichs (4) der Schraubhülse zur Führung einer Schraube.

5. Magnetisch-induktives Durchflussmessgerät nach einem der Ansprüche 1 bis 4,
**dadurch gekennzeichnet,**
**dass** der Faltenbalg (5) einen geringeren Außendurchmesser aufweist als die Schraubhülse in einem Bereich zur Führung einer Schraube.

6. Magnetisch-induktives Durchflussmessgerät nach einem der vorhergehenden Ansprüche mit zwei mittels einer Schraube (8) verschraubten Blechen (7),
**dadurch gekennzeichnet,**
**dass** die Schraubhülse (1) nach einem der Ansprüche 1 bis 5 umfasst, welche die Schraube (8) von den Blechen (7) isoliert.

7. Magnetisch-induktives Durchflussmessgerät nach einem der Ansprüche 1-6,
**dadurch gekennzeichnet,**
**dass** es zwei gegenüberstehende Schraubhülsen (1) umfasst, welche mittels der Schraube (8) so gegeneinander vorgespannt sind, dass sich zumindest eine Schraubhülse (1) um ein vorgegebenes Maß axial verkürzt, wobei sie zumindest teilweise die Form eines Faltenbalgs (5) annimmt.

8. Magnetisch-induktives Durchflussmessgerät nach einem der Ansprüche 1-7,
**dadurch gekennzeichnet,**
**dass** die Kernbleche (7) zumindest einen ersten Schenkel gleicher Form und Größe und vorgegebene Bohrungen im ersten Schenkel aufweisen, welche so angeordnet sind, dass die Bohrungen eines ersten Kernblechs deckungsgleich sind mit den Bohrungen eines zweiten Kernblechs, wobei das erste Kernblech und das zweite Kernblech zueinander axial versetzt durch die Spule (6) geführt sind oder wobei das erste Kernblech und das zweite Kernblech entgegengesetzt zueinander orientiert durch die Spule (6) geführt sind, wobei der erste Schenkel des ersten Kernblechs und der erste Schenkel des zweiten Kernblechs deckungsgleich angeordnet sind.

9. Magnetisch-induktives Durchflussmessgerät nach einem der Ansprüche 1-8,
**dadurch gekennzeichnet,**
**dass** jedes Kernblech einen ersten und einen zweiten Schenkel aufweist, welche L-förmig miteinander verbundenen sind, wobei zumindest ein erstes Kernblech und ein zweites Kernblech und ein drittes Kernblech so durch die Spule geführt sind, dass der erste Schenkel des ersten Kernblechs und der erste Schenkel des zweiten Kernblechs und der erste Schenkel des dritten Kernblechs parallel zueinander durch die Spule verlaufen und, dass der zweite Schenkel des ersten Kernblechs und der zweite Schenkel des zweiten Kernblechs und der zweite Schenkel des dritten Kernblechs parallel zueinander verlaufen, wobei der zweite Schenkel des ersten Kernblechs und der zweite Schenkel des dritten Kernblechs auf einer ersten Seite der Spule angeordnet sind und der zweite Schenkel des zweiten Kernblechs auf einer der ersten Seite abgewandten, zweiten Seite der Spule angeordnet ist, wobei das zweite Kernblech zwischen dem ersten und dem dritten Kernblech angeordnet ist und wobei ein Polschuh zwischen den zweiten Schenkeln des ersten und dritten Kernblechs und einem Messrohr angeordnet ist.

## Claims

1. Electromagnetic flowmeter with a coil (6) and core laminations (7) guided through the coil (6),
**characterized in that**
it comprises a screw sleeve (1), wherein the core laminations (7) are screwed together via a screw (8), wherein the screw (8) is isolated from the core laminations (7) by means of the screw sleeve (1), wherein the screw sleeve is designed in such a way that it shortens axially by a predefined value when a force of a predefined value acts on it axially, said screw sleeve at least partially adopting the shape of a folding bellows (5).

2. Electromagnetic flowmeter as claimed in Claim 1,
**characterized in that**
the screw sleeve has an area (3) with a reduced wall thickness which adopts the form of a folding bellows (5) when a force of a predefined value acts on it axially and therefore shortens axially by a predefined value.

3. Electromagnetic flowmeter as claimed in Claim 2,
**characterized in that**
the area (3) with the reduced wall thickness is arranged at the tip of the screw sleeve (1), wherein the area has a larger inner diameter and a smaller outer diameter than the screw sleeve (1) in an area (4) designed to guide a screw.

4. Electromagnetic flowmeter as claimed in one of the Claim 2 or 3,
**characterized in that**
the axial length of the area (3) with the reduced wall thickness is small compared with the axial length of an area (4) of the screw sleeve designed to guide a screw.

5. Electromagnetic flowmeter as claimed in one of the Claims 1 to 4,
**characterized in that**
the folding bellows (5) has a smaller outer diameter than the screw sleeve in an area designed to guide a screw.

6. Electromagnetic flowmeter as claimed in one of the previous claims with two laminations (7) screwed together with a screw (8),
**characterized in that**
it comprises the screw sleeve (1) as claimed in one of the Claims 1 to 5, which isolate the screw (8) from the laminations (7).

7. Electromagnetic flowmeter as claimed in one of the Claims 1 to 6,
**characterized in that**
it comprises two opposing screw sleeves (1) which are pretensioned in relation to one another with the screw (8) in such a way that at least one screw sleeve (1) shortens axially by a predefined value, said screw sleeve at least partially adopting the form of a folding bellows (5).

8. Electromagnetic flowmeter as claimed in one of the Claims 1 to 6,
**characterized in that**
the core laminations (7) have at least a first leg of the same size and shape and predefined boreholes in the first leg, which are arranged in such a way that the boreholes of a first core lamination are congruent with the boreholes of a second core lamination, wherein the first core lamination and the second core lamination are guided through the coil (6) in a manner in which they are axially offset towards to one another, or wherein the first core lamination and the second core lamination are guided through the coil (6) in an orientation opposite to one another (6), wherein the first leg of the first core lamination and the first leg of the second core lamination are arranged in a congruent manner.

9. Electromagnetic flowmeter as claimed in Claim 1 to 8,
**characterized in that**
every core lamination has a first and a second leg which are interconnected in a L-shape, wherein at least a first core lamination and a second core lamination and a third core lamination are guided through the coil in such a way that the first leg of the first core lamination and first leg of the second core lamination and the first leg of the third core lamination run in parallel to one another through the coil, and **in that** the second leg of the first core lamination and the second leg of the second core lamination and the second leg of the third core lamination run in parallel to one another through the coil, wherein the second leg of the first core lamination and the second leg of the third core lamination are arranged on a first side of the coil and the second leg of the second core lamination is arranged on a second side of the coil that faces away from the first side, wherein the second core lamination is arranged between the first and third core lamination and where a pole shoe is arranged between the second legs of the first and third core lamination and a measuring tube.

## Revendications

1. Débitmètre électromagnétique avec une bobine (6) et des tôles de noyau (7) guidés à travers la bobine (6),
**caractérisé**
**en ce qu'**il comprend une douille filetée (1), les tôles de noyau (7) étant vissées au moyen d'une vis (8), la vis (8) étant isolée des tôles de noyau (7) au moyen de la douille filetée (1), la douille filetée étant conçue de telle sorte à ce qu'elle se raccourcisse d'une valeur prédéfinie en présence d'une force de grandeur prédéfinie agissant axialement sur elle, la douille adoptant au moins partiellement la forme d'un soufflet (5).

2. Débitmètre électromagnétique selon la revendication 1,
**caractérisé**
**en ce que** la douille filetée présente une zone (3) d'une épaisseur de paroi réduite, laquelle adopte la forme d'un soufflet (5) en présence d'une force de grandeur prédéfinie agissant axialement sur lui, et qui se raccourcit ainsi d'une valeur prédéfinie.

3. Débitmètre électromagnétique selon la revendication 2,
**caractérisé**
**en ce que** la zone (3) avec l'épaisseur de paroi réduite est disposée à la pointe de la douille filetée (1), la zone présentant un diamètre intérieur supérieur et un diamètre extérieur inférieur à la douille filetée (1) dans une zone (4) destinée à guider une vis.

4. Débitmètre électromagnétique selon l'une des revendications 2 ou 3,
**caractérisé**
**en ce que** la longueur axiale de la zone (3), dont l'épaisseur de paroi est réduite, est petite comparée à la longueur axiale d'une zone (4) de la douille filetée destinée au guidage d'une vis.

5. Débitmètre électromagnétique selon l'une des revendications 1 à 4,
**caractérisé**
**en ce que** le soufflet (5) présente un diamètre extérieur inférieur à la douille filetée dans une zone destinée au guidage d'une vis.

6. Débitmètre électromagnétique selon l'une des revendications précédentes avec deux tôles (7) vissées au moyen d'une vis (8),
**caractérisé**
**en ce que** la vis comprend une douille filetée (1) selon l'une des revendications 1 à 5, laquelle isole la vis (8) par rapport aux tôles (7).

7. Débitmètre électromagnétique selon l'une des revendications 1 à 6,
**caractérisé**
**en ce qu'**il comprend deux douilles filetées (1) opposées, lesquelles sont précontraintes l'une par rapport à l'autre au moyen de la vis (8) de telle sorte qu'au moins une douille filetée (1) se raccourcisse axialement d'une valeur prédéfinie, laquelle douille adopte au moins partiellement la forme d'un soufflet (5).

8. Débitmètre électromagnétique selon l'une des revendications 1 à 7,
**caractérisé**
**en ce que** les tôles de noyau (7) comportent au minimum une première branche de même forme et taille, ainsi que des trous prédéfinis dans la premier branche, qui sont disposés de telle sorte que les trous d'une première tôle de noyau coïncident parfaitement avec les trous d'une deuxième tôle de noyau, la première tôle de noyau et la deuxième tôle de noyau étant guidées de façon décalée axialement l'une par rapport à l'autre à travers la bobine (6) ou la première tôle de noyau et la deuxième tôle de noyau étant guidées selon une orientation opposée l'une à l'autre à travers la bobine (6), la première branche de la première tôle de noyau et la première branche de la deuxième tôle de noyau étant disposées de manière coïncidente.

9. Débitmètre électromagnétique selon l'une des revendications 1 à 8,
**caractérisé**
**en ce que** chaque tôle de noyau comporte une première et une deuxième branche, qui sont reliées entre elles en forme de L, au moins une première tôle de noyau et une deuxième tôle de noyau et une troisième tôle de noyau étant guidées à travers la bobine de telle sorte que la première branche de la première tôle de noyau et la première branche de la deuxième tôle de noyau et la première branche de la troisième tôle de noyau s'étendent parallèlement à travers la bobine, en ce que la deuxième branche de la première tôle de noyau et la deuxième branche de la deuxième tôle de noyau et la deuxième branche de la troisième tôle de noyau sont parallèles entre elles, la deuxième branche de la première tôle de noyau et la deuxième branche de la troisième tôle de noyau étant disposées sur un premier côté de la bobine et la deuxième branche de la deuxième tôle de noyau étant disposées sur un deuxième côté de la bobine, opposé au première côté, la deuxième tôle de noyau étant disposée entre la première et la troisième tôle de noyau et une pièce polaire étant disposée entre les deuxièmes branches de la première et de la troisième tôle de noyau et un tube de mesure.
